# EUROPEAN PATENT APPLICATION

(11) **EP 3 002 252 A1**
(43) Date of publication of application: **06.04.2016**
(21) Application number: 14003375.4
(22) Date of filing: 30.09.2014
(51) Int. Cl.: C01B 31/02, C01B 31/04, C01B 31/06

(54) **Controlled functionalization of carbon based nanomaterials**

(71) Applicant: Freie Universität Berlin, 14195 Berlin (DE)
(72) Inventor: Haag, Rainer, 12209 Berlin (DE); Adeli, Mohsen, 14197 Berlin (DE); Ziem, Benjamin, 13507 Berlin (DE)
(74) Representative: Müller-Boré & Partner Patentanwälte PartG mbB

(57) **Abstract**

The present invention relates to a method for functionalizing carbon based nanomaterials (CBN) such as graphene, graphite, carbon nanotubes, fullerenes, etc., as well as to a compound usable in said method and respective post-functionalized carbon based nanomaterials.

## Description

The present invention relates to a method for functionalizing carbon based nanomaterials (CBN) such as graphene, graphite, carbon nanotubes, fullerenes, etc., as well as to a compound usable in said method and respective post-functionalized carbon based nanomaterials.

Functionalization of carbon based nanomaterials by covalent and non-covalent approaches is a well-known and simple strategy to increase their processability and to develop them to a wide range of favorite nanomaterials. Reaction between a conjugated π-system and nitrenes, produced by azide precursors, is one of the most common methods to introduce functional groups onto the surface of carbon based nanomaterials including fullerenes, carbon onions, carbon nanotubes, and graphene. Polymers with azide functional groups are also conjugated onto the surface of carbon based nanomaterials by nitrene chemistry.

However, due to the aromaticity of carbon based nanomaterials and stability of their π-system, conjugation of molecules or macromolecules onto their surface by [2+1] nitrene cycloaddition is usually a time consuming reaction and harsh conditions are required. These conditions can lead to alteration/destruction of the CBNs and the functional groups, respectively.

As an alternative, functionalization of carbon nanotubes and graphene sheets by perfluoroazides as precursors of highly reactive nitrenes at ambient temperatures has been reported recently. Herein, perfluoroazides containing a carboxyl functional group were used through which a variety of polymers or functional groups were conjugated onto the surface of the mentioned carbon based nanomaterials. However, while these reactions are carried out under lower temperature conditions, supply of energy is still required. In addition, the use of perfluoroazides to functionalize carbon based nanomaterials is restricted by a rather complex chemistry and the formation of inhomogeneous products. Moreover, it has remained unclear whether the efficiency of the reactions is superior to the established [2+1] nitrene cycloaddition approach. In addition, since perfluoroazides in these reactions are not commercially available compounds and their synthetic procedures are sometimes problematic, high scale functionalization by the above methods is not possible. On the other hand, these precursors are mostly perflourocompounds and their post-functionalization by direct nucleophilic substitution of fluoride groups is not possible. Therefore, postfunctionalization is not a straightforward, easy process and is not compatible with a variety of chemical reactions under different conditions.

The problem underlying the present invention is thus to overcome the above-mentioned problems and to provide a facile and efficient method to functionalize and postfunctionalize carbon based nanomaterials at a variety of ambient or near ambient conditions using cheap and easily available compounds, and to provide functionalized and post-functionalized carbon based nanomaterials with a high grade of functionalization and homogeneity.

Therefore, a first aspect of the present invention relates to a method for functionalizing carbon based nanomaterials, comprising reacting a carbon based nanomaterial (CBN) comprising at least one conjugated π-electron system with a compound of the following general Formula (1): 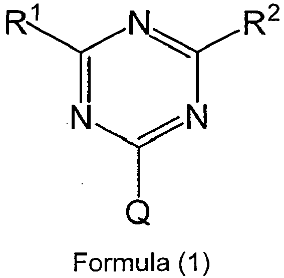 wherein Q represents a nitrene precursor or a nitrene, and R¹ and R² independently from each other represent a leaving group, to obtain a functionalized carbon based nanomaterial of the following general Formula (2):

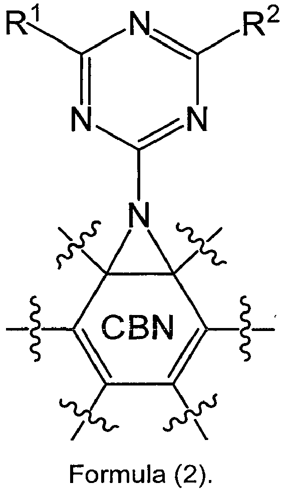

Herein, the expression "carbon based nanomaterial" is not particularly restricted and includes any type of material that is based on carbon as it main component. In particular, the carbon based nanomaterials according to the present invention may have a carbon skeletal structure composed of carbon rings, in which one or more of the carbon atoms may be replaced by heteroatoms such as e.g. nitrogen, boron, silicium etc. The size of the various rings is not particularly restricted and includes rings such as 3-membered, 4-membered, 5-membered, 6-membered, 7-membered, 8-membered etc. rings. According to the present invention, a structural unit of the carbon based nanomaterial is graphically represented by the following general Formula (7).

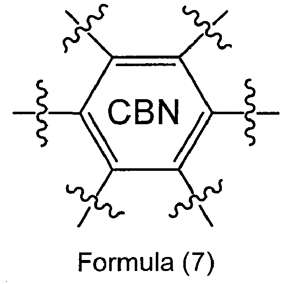

While the structural unit depicted in Formula (7) is used herein as a representation of a general reaction site within the CBN comprising a conjugated π-electron system, it is understood that the method and the (post-)functionalized carbon based nanomaterial of the present invention are not limited to said structural unit as such.

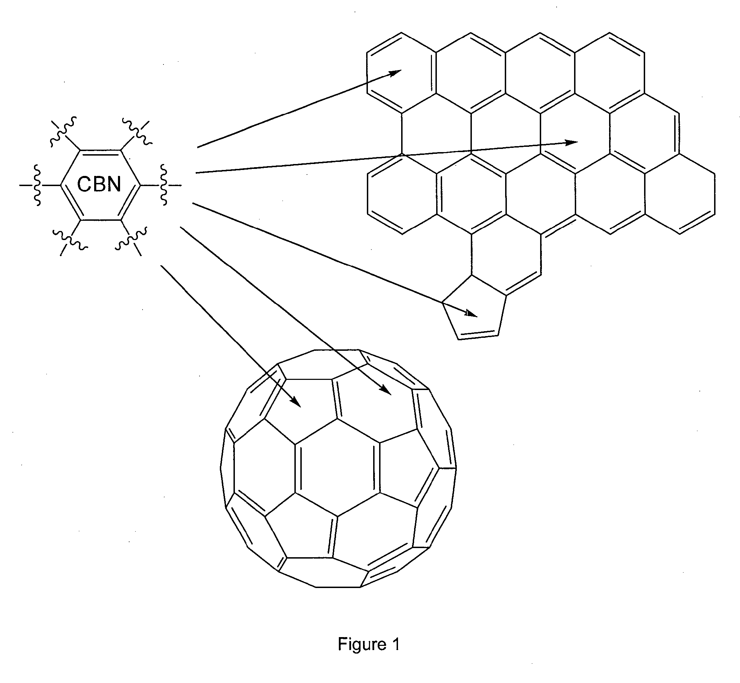

For example, it should be noted that the above Formula (7), although schematically depicted as a 6-membered ring, includes other structural units of the carbon based nanomaterial having a different ring size, such as those defined above. This definition is further described in Figure 1, in which the above Formula (7) exemplarily represents 5-membered or 6-membered rings in a graphene sheet or in a fullerene. Similarly, the structural unit of Formula (7), while containing exemplarily six delocalized π-electrons, also includes cases with different number of delocalized π-electrons, such as two or four.

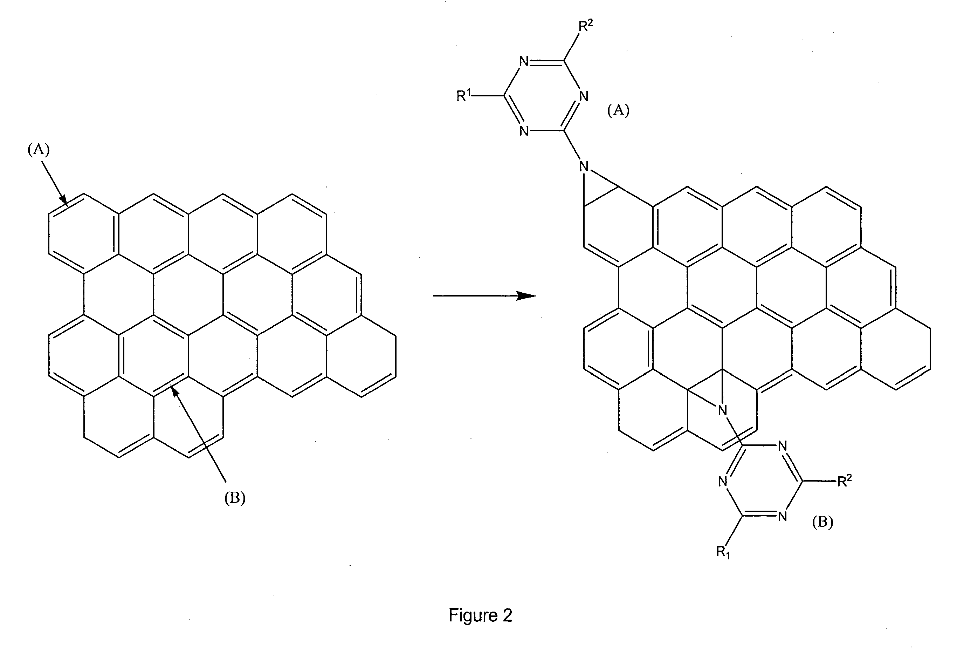

Moreover, the position of the reaction site within the CBN as represented by the structural unit of Formula (7) is not specifically limited and can be at a border portion of the CBN or at a center portion thereof (cf. for example Figure 2). According to the present invention, the reaction can take place at a single site within the CBN or can take place at multiple sites. For example, the method of the present invention can be used to functionalize a part or the entirety of the surface of a CBN to thus provide the carbon based nanomaterial with a desired functionality and specific chemical and physical properties.

Herein, the expression "conjugated π-electron system" is not specifically restricted and in its broadest sense refers to a region of overlapping p-orbitals within the CBN, bridging the interjacent single bonds. This allows a delocalization of π-electrons across all the adjacently aligned p-orbitals. In such a conjugated system, the π-electrons do not belong to a single bond or atom, but rather to a group of atoms. According to the present invention, the conjugated π-electron system is not specifically limited with respect to its size and may e.g. be comprised of two interjacent carbon-carbon double bonds or may extend over a large number of bonds within the CBN structure.

According to one embodiment of the present invention, the carbon based nanomaterial is selected from the group consisting of carbon nanotubes, graphene, graphite, graphene oxide, graphite oxide, nanodiamonds and fullerenes.

In a further embodiment of the method as defined above, the reaction is carried out at a temperature of 50°C or below. For example, the reaction may be carried out at 40°C or below, at 35°C or below, or at 30°C or below. According to a preferred embodiment, the reaction may be carried out at 25°C (room temperature) or below, for example at 20°C or below, at 15°C or below, at 10°C or below, or at 5°C or below.

The temperature may be adjusted by supplying energy to the reaction mixture by any method known to a person skilled in the art, including the use of a heating plate or microwave irradiation. The temperature may also be adjusted by cooling the reaction mixture by any method known to a person skilled in the art, including the use of e.g. an ice bath or a cryostat.

The reaction time is not particularly limited and e.g. includes reaction times from a few minutes to several hours or days. A person skilled in the art will readily adjust the reaction time depending on the reaction temperature, starting materials, solvent and intended density of functionalization of the carbon based nanomaterial. According to one embodiment, the reaction is carried out as an overnight reaction, i.e. in about 12 hours.

The number of conjugated triazine groups per carbon atoms of carbon based nanomaterials (density of functionalization) introduced by the method of the present application is not particularly restricted. A person skilled in the art will readily select the type of carbon based nanomaterial, temperature, solvent etc. to achieve the intended density of functionalization. The density of functionalization may, for example, be varied between 0.5 to 10%, preferably between 1 to 4%.

By using the compound of Formula (1) as defined above, the functionalization reaction of the present application can be carried out effectively at temperatures as low as room temperature or below. This advantageous effect is *inter alia* based on the electronic configuration of the triazine structure. In particular, the highly reactive compound of general Formula (1), in which Q is a nitrene precursor or a nitrene, efficiently conjugates via residue Q onto the surface of carbon based nanomaterials at ambient conditions, e.g. by [2+1] nitrene cycloaddition (cf. Figure 2).

Moreover, according to one embodiment in the above-defined method, the reaction mixture is sonicated. According to the present invention, sonication, such as the application of ultrasound, advantageously leads to an increase in yield by promoting debundling of CBNs such as nanotubes, or by promoting separation of the layers of a CBN such as graphite. There is no limitation with respect to the type and method for carrying out sonication and typical examples include the use of an ultrasound bath or an ultrasound horn. The sonication may be carried out during the entire reaction time or at intervals during the reaction. For example, sonication may be performed at intervals during the reaction for 10 to 20 minutes.

According to the present invention, the solvent of the functionalization reaction is not particularly restricted, and thus any suitable protic or aprotic solvent or solvent mixture can be used. According to specific embodiments, the solvent is N-methyl-2-pyrrolidon (NMP), dimethylformamide (DMF) or 1,2-dichlorobenzene.

A further embodiment relates to the above-defined method, wherein R¹ and R² are independently selected from fluoride, chloride, bromide, iodide, and tosylate. According to a preferred embodiment, each of R¹ and R² is chloride.

A further embodiment relates to the method as defined above, wherein Q is an azide group or an isocyanate group. According to a particularly preferred embodiment, Q is an azide group. The use of an azide group is particularly preferred, since as a nitrene precursor, it can readily undergo a [2+1] cycloaddition with a delocalized π-electron system in the CBN. In addition, the use of an azide group is also preferable from a synthesis standpoint, because it may easily be introduced into the compound of general Formula (1) by reaction e.g. with a metal azide.

In a further embodiment of the above-defined method, Q is an azide group and the compound of general Formula (1) is generated *in situ* by the reaction of a metal azide and a compound of the general Formula (3): 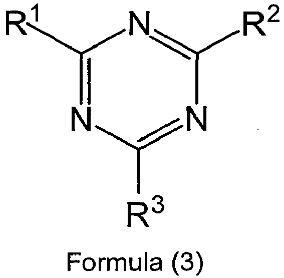 wherein R¹ and R² are defined as above, and R³ is selected from fluoride, chloride, bromide, iodide and tosylate.

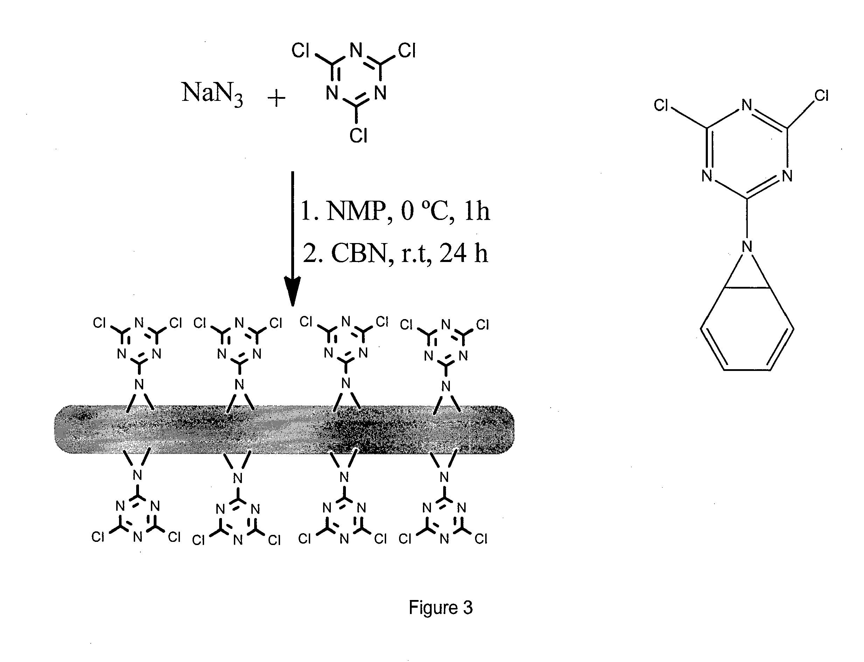

In an even further embodiment in the method as defined above, each of R¹, R² and R³ is chloride and the metal azide is sodium azide. By using the compound of Formula (3) in which each of R¹, R² and R³ is chloride a cheap starting material is available into which a nitrene precursor group, or a nitrene as such, can readily be introduced (cf. Figure 3).

Moreover, in one embodiment, the method as define above further comprises reacting the functionalized carbon based nanomaterial of the following general Formula (2) 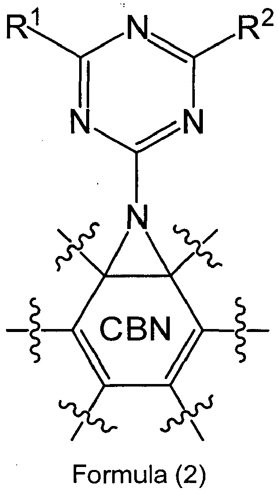 with a nucleophilic compound X to obtain a post-functionalized carbon based nanomaterial according to the following general Formula (4):

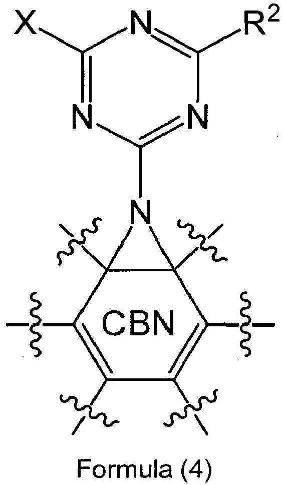

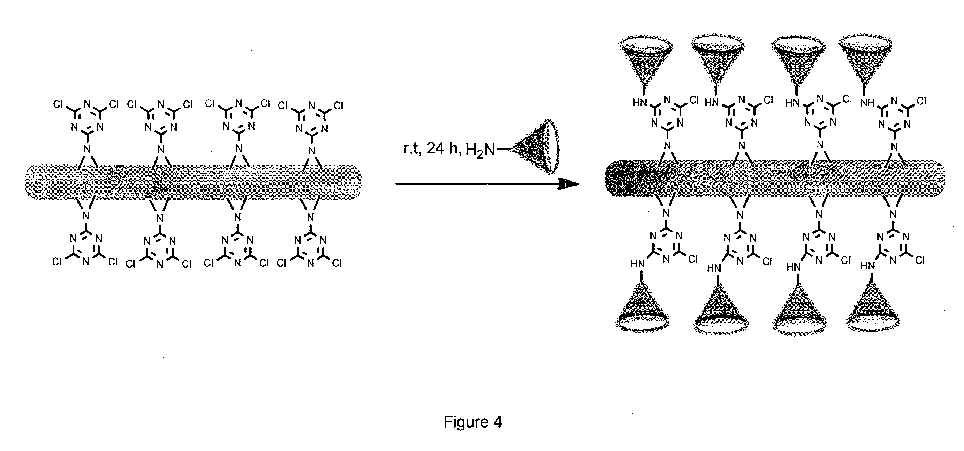

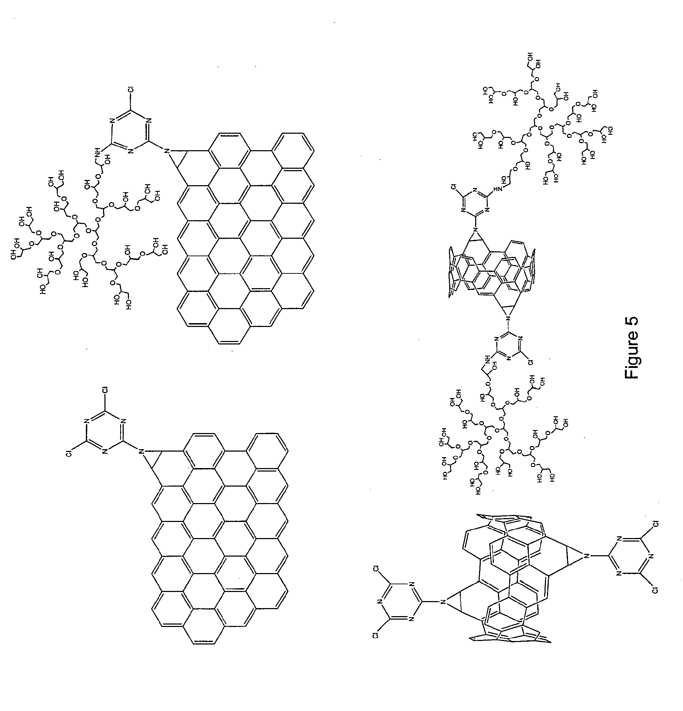

According to the present invention, the nucleophilic compound X is not particularly restricted and may be any nucleophilic compound that is suitable to react with the functionalized carbon based nanomaterial of general Formula (2). The nucleophilic compound X may be an uncharged compound such as e.g. an amine or an alcohol, or a charged compound such as e.g. an alcoholate. A person skilled in the art is aware of the fact that the nucleophilic compound X, particularly in case of being an uncharged compound, may lose a leaving group after/during attacking the functionalized carbon based nanomaterial of general Formula (2) to return being uncharged. For example, if the nucleophilic compound X is an amine compound R-NH₂, said compound may be deprotonated during or after reaction to form a compound of general Formula (4) wherein X is NH-R (cf. Figures 4 and 5). This fact is well known to a person skilled in the art and it is understood that the substituent X encompasses both the initial nucleophilic compound as well as the substituent bound after reaction.

In a particular embodiment of the above-defined method, the nucleophilic compound X is an amino-functionalized polyglycerol, an amino-functionalized cyclodextrin, a polymer, an initiator for polymerization, an amino acid, a biopolymer, DNA, RNA, a dye, a fluorescein or a polycaprolactone.

Moreover, according to a further embodiment, the afore-defined method further comprises reacting the post-functionalized carbon based nanomaterial according to general Formula (4) with a nucleophilic compound Y to obtain a post-functionalized carbon based nanomaterial according to the following general Formula (5):

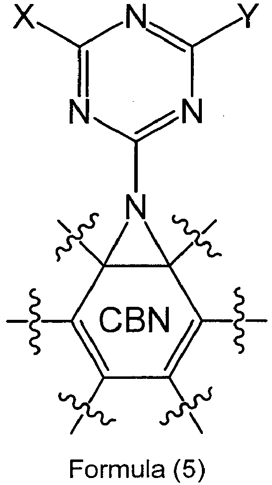

According to the present invention, the nucleophilic compound Y is not particularly restricted and may be any nucleophilic compound that is suitable to react with the post-functionalized carbon based nanomaterial of general Formula (4). The nucleophilic compound Y may be an uncharged compound such as e.g. an amine or an alcohol, or a charged compound such as e.g. an alcoholate. A person skilled in the art is aware of the fact that the nucleophilic compound Y, particularly in case of being an uncharged compound, may lose a leaving group after/during attacking the functionalized carbon based nanomaterial of general Formula (4) to return being uncharged. For example, if the nucleophilic compound Y is an amine compound R-NH₂, said compound may be deprotonated after attack to form a compound of general Formula (5) wherein Y is NH-R. Thus, as defined above for substituent X, substituent Y also encompasses both the initial nucleophilic compound as well as the substituent bound after reaction. The nucleophilic compound Y may also be one of the specific nucleophilic compounds as defined for the nucleophilic compound X above.

Furthermore, according to one embodiment of the above-defined method the nucleophilic compound Y is an azide or a thiol, e.g. for further post-functionalization. Such a post-functionalization may e.g. be a click-reaction with a compound such as propargyl bromide, or a Michael or redox reaction.

According to one embodiment of the present invention, nucleophilic compounds X and Y are the same, and thus a homofunctional surface in the CBN can be provided.

According to another embodiment of the present invention, nucleophilic compounds X and Y are different from each other, and thus it is advantageously possible to provide a bifunctional surface in the CBN. In this embodiment, the reaction with the nucleophilic compound X is preferably carried out at a temperature lower than the reaction with the nucleophilic compound Y. For example, the reaction temperature in the reaction with the nucleophilic compound X is lower than the reaction temperature with the nucleophilic compound Y by 10°C or more, by 15°C or more, by 20°C or more, or by 25°C or more. Due to the difference between the reactivity of the functionalized carbon based nanomaterial of general Formula (2) and the post-functionalized carbon based nanomaterial of general Formula (4) as a result of the different number of leaving groups, it is advantageously possible to provide a bifunctional surface in the CBN by manipulation of the reaction temperature.

For example, based on the different reactivity of these two nucleophilic substitution reactions, it is advantageously possible to selectively introduce nucleophilic compound X at a lower temperature such as 35°C or less, 30°C or less, 25°C or less, or 20°C or less, and to subsequently introduce nucleophilic compound Y at a higher temperature, such as 40°C or more, 45°C or more, 50°C or more, or 55°C or more. According to another example, in case nucleophilic compounds X and Y are the same, both postfunctionalization reactions can be advantageously carried out in a single reaction at elevated temperatures of e.g. 40°C or more, 45°C or more, 50°C or more, or 55°C or more. A high-density homofunctional surface can thus be obtained in an efficient onestep reaction.

According to the present invention, the solvent of the above-mentioned post-functionalization reaction is not particularly restricted, and thus any suitable protic or aprotic solvent or solvent mixture can be used. According to specific embodiments, the solvent is N-methyl-2-pyrrolidon (NMP), water, methanol, dichloromethane or N,N-dimethylformamide (DMF).

The reaction time for post-functionalization is not particularly limited and e.g. includes reaction times from a few minutes to several hours or days. A person skilled in the art will readily adjust the reaction time depending on the reaction temperature, type of the reaction, starting materials and solvent. Moreover, the reaction mixture may also be sonicated during post-functionalization.

A further aspect of the present invention relates to a use of a compound represented by the following general Formula (1): 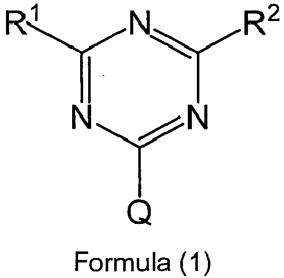 wherein Q represents a nitrene precursor or a nitrene, and R¹ and R² independently from each other represent a leaving group, in the functionalization of carbon based nanomaterials. It should be noted that the definitions provided above for groups Q, R¹ and R² also apply for the same groups in this aspect.

Another aspect of the present invention relates to a functionalized or post-functionalized carbon based nanomaterial represented by the following general Formula (6): 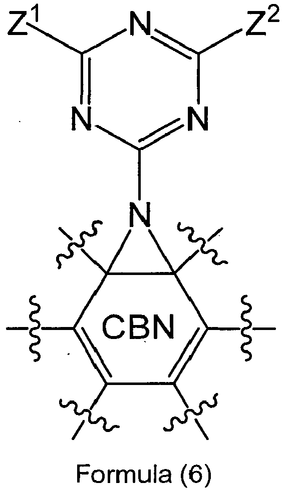 wherein Z¹ and Z² are independently from each other selected from a halogen atom, an amino group, a hydroxy group, an ether group, an ester group, a substituted or unsubstituted alkyl group, a substituted or unsubstituted aromatic group, an substituted or unsubstituted heteroaromatic group, a polyglycerol group, a macrocycle, a nanoparticle, a cyclodextrin, a calixarene, a polymer, an initiator for polymerization, an amino acid, a biopolymer, DNA, RNA and a dye.

According to a further aspect, the present invention provides a method for functionalizing carbon based nanomaterials such as graphene oxide or a nanodiamond by reacting the carbon based nanomaterial with a compound of the general Formula (3) wherein at least one of R¹, R² or R³ is chloride. In this embodiment, the triazine compound of the general Formula (3) is conjugated to the CBN by a nucleophilic substitution reaction between the chloride functional group of the triazine and any hydroxyl functional groups of the CBN.

The Figures show:
Figure 1 shows various structures which are represented in the present invention by Formula (7).
Figure 2 shows the reaction of the compound of general Formula (1), in which Q is a nitrene precursor or a nitrene, via residue Q onto the surface of a carbon based nanomaterial.
Figure 3 schematically shows the reaction of a compound of general Formula (1), which is generated *in situ* by the reaction of sodium azide, and a compound of the general Formula (3), with a CBN to yield a CBN that is functionalized at multiple sites.
Figure 4 schematically shows the reaction of the functionalized CBN of Figure 3 with an amine nucleophile to yield a post-functionalized CBN, which may be further post-functionalized by another nucleophilic compound at the chloro substituents.
Figure 5 schematically shows a variety of (post)-functionalized CBNs of the graphene type (top) or of the nanotube type (bottom).

The present invention provides a versatile and simple method for functionalizing carbon based nanomaterials (CBN) which can be carried out an ambient temperature of 50°C or below, i.e. at temperatures that do not alter/deteriorate the CBN and functional groups. The functionalized carbon based nanomaterials obtained by the method of the present invention can be further (post-)functionalized to readily provide bi- or homofunctional surfaces in CBNs while avoiding harsh reaction conditions and thus the formation of undesired by-products and inhomogeneous products (cf. Figure 5). These post-functionalization reactions can be carried out easily and selectively by exploiting the different reactivities of the individual leaving groups at different temperatures.

In the following, the present invention is further described in more detail, however, without any restriction thereto.

### Examples:

### Materials and methods:

Multi-walled carbon nanotube (MWNT, length= 5 µm, diameter= 6-9 nm), doublewalled carbon nanotube (DWNT, length= 3 µm, diameter= 3.5 nm), single-walled carbon nanotubes (SWNT), Fullerene (Full), glycidol, 2,4,6-trichloro-1,3,5-triazine (cyanuric chloride or triazine), and dialysis bag (benzoylated cellulose, MWCO 2000 and 50000) were provided from Sigma-Aldrich (Schnelldorf, Germany). Graphene (RGO) was prepared by reduction of the graphene oxide according to reported procedure in literature. Sodium azide and N-methyl-2-pyrrolidone were purchased from Merck (Germany). Propargyl bromide was purchased from Acros Organics (Geel, Belgium). Infrared (IR) spectra were recorded using a JASCO spectrometer. ¹H-NMR spectra were recorded in D₂O solution on a Bruker DRX 500 (500 MHz) apparatus with the solvent proton signal for reference. ¹³C-NMR spectra were recorded at 125.7 MHz on the same instrument using the solvent carbon signal as a reference. All polymer NMR spectra were recorded at a concentration of 20 mg/mL of sample. Ultrasonic bath (Model: SONOREX, RK255 HZ, Made in Germany) was used to disperse materials in solvents. TGA measurements were recorded by a STA 409 apparatus (from Netzsch) in temperatures ranging from 25-800 °C with a 10 °C/min heating rate under air. Elemental analysis was performed using ELEMENTAR apparatus with three columns and detector for carbon, nitrogen, hydrogen and sulfur elements. Molecular weight distributions were determined by size exclusion chromatography (SEC) equipped with a refractive index detector (operated at 50 °C) providing the parameters Mn, Mw, and PDI.

### Example 1: Synthesis of amino- functionalized polyglycerol (PG-NH₂)

%5amino-functionalized polyglycerol (%5PG-NH2) was synthesized according to a reported procedure in literature. In a three-step protocol, hyperbranched polyglycerol (hPG, molecular weight of Mn= 6300 g mol⁻¹, PDI< 1.2, and a degree of branching of ∼ 60%) was mesylated and subsequently transformed to azido-functionalized derivative through reaction with sodium azide in aqueous solution. Finally reduction of azide functional groups to amino analogs using triphenylphosphine yielded hPG-NH₂.

### Example 2: General procedure for functionalization of carbon based nanomaterials by triazine (CBNs-trz)

In a typical reaction cyanuric chloride (10g, 0.054 mol) was dissolved in 30 ml NMP (or 1,2-dichlorobenzene) and then sodium azide (3.52g, 0.054 mol) (dispersed in 10 ml of the same solvent) was added to this solution at 0 °C and the mixture was stirred for 60 min. Color of solution was changed to yellow and then orange and NaCl was formed as a white precipitate. Then, CBN (1 g) was added to the mixture and it was stirred at 0 °C for 2 h. To obtain CBNs with different density of functional groups, temperature was raised to 25 or 70 °C and mixture was stirred for additional 10 h. Meanwhile, the mixture was sonicated several minutes. In the case of DWNT and RGO, nitrogen was bubbled from the reaction mixture, especially upon sonication. Then, the reaction was cooled down and it was centrifuged at 8000 rpm for 6 min. The precipitate was dispersed in acetone and again collected by centrifugation three times. Then, the product was dispersed in water and collected by centrifugation at the same rpm two times. Finally, it was again dispersed in acetone and precipitated by centrifugation at 8000 rpm. Then, the product was lyophilized overnight. The weight of the product increased when compared to the starting CBNs 5-15% depending on the type of CBN.

### Example 3: Reaction between CBNs-trz and PG-NH₂ in water

In a typical reaction, a fine powder (0.2 g) of CBNs-trz was added to 50 ml water in a round bottom flask and it was sonicated for 20 min to obtain a fine dispersion of CBNs. Then, PG-NH₂ (1.8 g) dissolved in 20 ml water was added to the mixture at 0 °C and it was stirred at this temperature for 1 h. Then, the mixture was sonicated at room temperature for 15 min and stirred at this temperature for 2 days. Then the mixture was centrifuged at 3000 rpm for 10 min to separate the nonfunctionalized CBNs and the supernatant was dialysed in water for 2 days to obtain the pure polyglycerol functionalized CBNs (CBNs-PG).

### Example 4: Reaction between CBNs-trz and PG-NH₂ in NMP

In a typical reaction, a single walled carbon nanotube (SWNT) (0.3 g) was dispersed in 200 ml NMP and then was sonicated at room temperature for 2 h. Then, PG-NH₂ (4.2 g) dissolved in 20 ml NMP was added to the mixture at 0 °C and it was stirred at this temperature for 2 h. Triethylamine (Et₃N) (2 ml) was added to the mixture and it was stirred at room temperature for one week. In intervals, the mixture was sometimes sonicated for 5-10 min. The product was precipitated in acetone and dialyzed in water for two days.

### Example 5: Sulfunation of CBNs-PG

RGO-PG (0.7 g) was dried by a lyophilizer and dispersed in dry DMF (20 ml) and then pryridine sulfur trioxide (2.5 g), dissolved in 10 ml dry DMF, was added to the RGO-PG dispersion over 1 h at 60 °C. The mixture precipitated after 30 min. The precipitate was dissolved by sonication and then sonicated at 55 °C for additional 1 h. Again, the mixture was precipitated. The precipitated compound in DMF was stirred overnight.

### Example 6: Preparation of azido-functionalized CBNs-PG (CBNs-PG-N₃)

In a typical reaction, to a water solution of CBNs-PG (0.1 g in 15 ml water) sodium azide (0.4 g) was added at 0 °C and the solution was stirred at this temperature for 1 h and then at room temperature overnight. The reaction was cooled down and the product was dialyzed in water for 2 days.

### Example 7: Investigation of a click reaction between CBNs-PG-N₃ and propargyl bromide

CBNs-PG-N₃ (0.05 g) was added to methanol (15 ml) in a round bottom flask and it was sonicated for 20 min. Then, propargyl bromide (1 ml) was added to this solution at room temperature and it was stirred for 1 h. IR spectra recorded from the reaction mixture didn't show any azide absorption band after 30-120 min depending on the type of CBN. The product was several times precipitated in acetone and it was dried under vacuum.

## Claims

1. A method for functionalizing carbon based nanomaterials, comprising reacting a carbon based nanomaterial (CBN) comprising at least one conjugated π-electron system with a compound of the following general Formula (1): 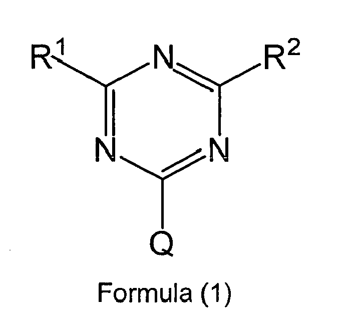
wherein Q represents a nitrene precursor or a nitrene and
R¹ and R² independently from each other represent a leaving group;
to obtain a functionalized carbon based nanomaterial of the following general Formula (2):

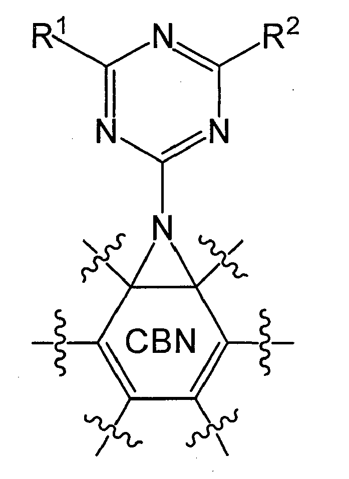

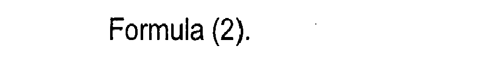

2. The method according to claim 1, wherein the reaction is carried out at a temperature of 50°C or below.

3. The method according to claim 1 or 2, wherein the reaction mixture is sonicated.

4. The method according to any one of claims 1 to 3, wherein R¹ and R² are independently selected from fluoride, chloride, bromide, iodide and tosylate.

5. The method according to any one of claims 1 to 4, wherein Q is an azide group or an isocyanate group.

6. The method according to claim 5, wherein Q is an azide group and the compound of general Formula (1) is generated *in situ* by the reaction of a metal azide and a compound of the general Formula (3): 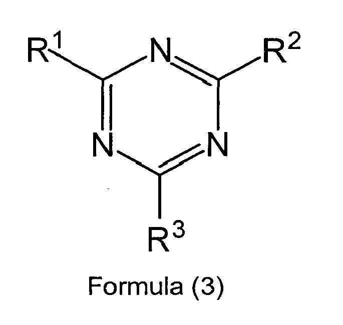
wherein R¹ and R² are defined as above; and
R³ is selected from selected from fluoride, chloride, bromide, iodide and tosylate.

7. The method according to claim 6, wherein each of R¹, R² and R³ is chloride and the metal azide is sodium azide.

8. The method according to any one of claims 1 to 7, wherein the carbon based nanomaterial is selected from the group consisting of carbon nanotubes, graphene, graphite, graphene oxide, graphite oxide, nanodiamonds and fullerenes.

9. The method according to any one of claims 1 to 8, further comprising reacting the functionalized carbon based nanomaterial of the following general Formula (2) 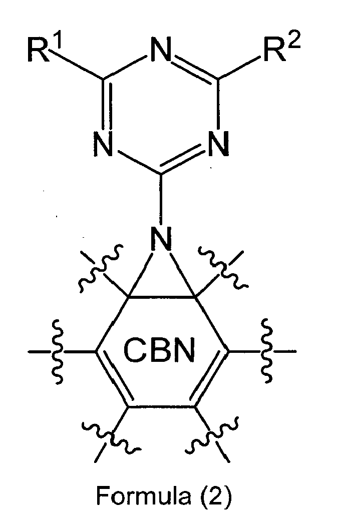 with a nucleophilic compound X to obtain a post-functionalized carbon based nanomaterial according to the following general Formula (4):

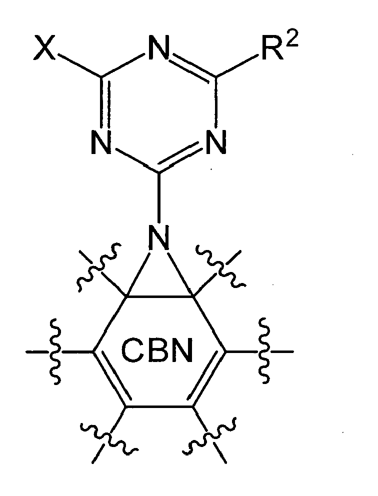

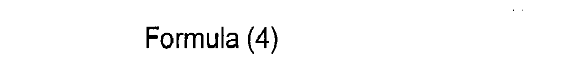

10. The method according to claim 9, wherein the nucleophilic compound X is an amino-functionalized polyglycerol, an amino-functionalized cyclodextrin, a polymer, an initiator for polymerization, an amino acid, a biopolymer, DNA, RNA, a dye, a fluorescein or a polycaprolactone.

11. The method according to claim 9 or 10, further comprising reacting the post-functionalized carbon based nanomaterial according to general Formula (4) with a nucleophilic compound Y to obtain a post-functionalized carbon based nanomaterial according to the following general Formula (5):

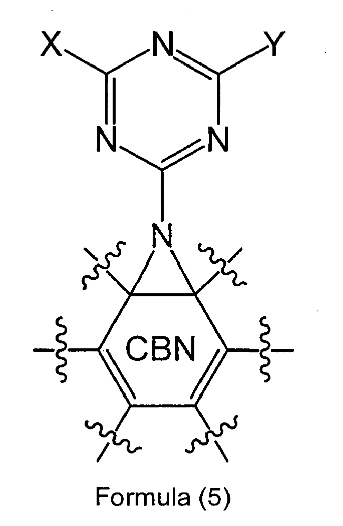

12. The method according to claim 11, wherein the reaction with the nucleophilic compound X is carried out at a temperature lower than the reaction with the nucleophilic compound Y.

13. The method according to claims 11 or 12, wherein the nucleophilic compound Y is an azide or a thiol for further post-functionalization.

14. Use of a compound represented by the following general Formula (1): 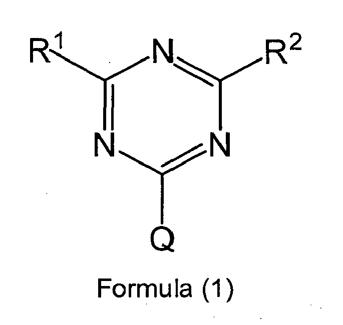
wherein Q represents a nitrene precursor or a nitrene, or is chlorine; and
R¹ and R² independently from each other represent a leaving group, in the functionalization of carbon based nanomaterials.

15. A functionalized or post-functionalized carbon based nanomaterial represented by the following general Formula (6): 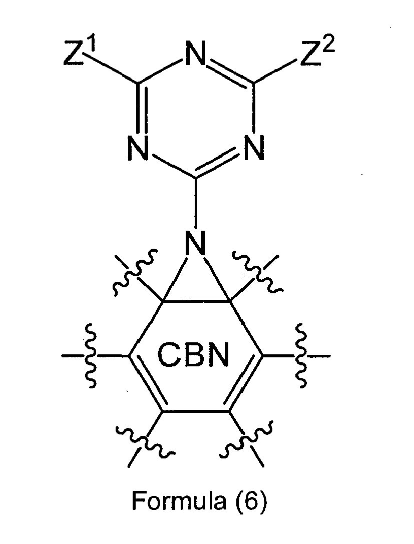 wherein Z¹ and Z² are independently from each other selected from a halogen atom, an amino group, a hydroxy group, an ether group, an ester group, a substituted or unsubstituted alkyl group, a substituted or unsubstituted aromatic group, an substituted or unsubstituted heteroaromatic group, a polyglycerol group, a macrocycle, a nanoparticle, a cyclodextrin, a calixarene, a polymer, an initiator for polymerization, an amino acid, a biopolymer, DNA, RNA and a dye.
